# EUROPEAN PATENT APPLICATION

(11) **EP 0 866 295 A1**
(43) Date of publication of application: **23.09.1998**
(21) Application number: 98300878.0
(22) Date of filing: 06.02.1998
(51) Int. Cl.: F27B 7/34, C03B 5/235

(54) **Operation of rotary kilns**

(30) Priority: 18.03.1997 GB 9705584
(71) Applicant: The BOC Group plc, Windlesham Surrey GU20 6HJ (GB)
(72) Inventor: Chapman, Robert David, Harrogate, North Yorkshire, HG3 4E (GB)
(74) Representative: MacLean, Martin David

(57) **Abstract**

A method of operating a rotary kiln for thermally processing feed material such as cement, lime or the like in which liquid oxygen is injected into the kiln so as to impact on the feed material therein.

## Description

This invention relates to methods of operating rotary kilns. Rotary kilns are used for processing mineral products such as cement, lime, alumina, calcining clays, chromium ore, vanadium oxide and phosphate rock.

In rotary kilns a feed material to be processed is charged, continuously or intermittently, to the rotary portion of the kiln, which may be envisaged as a cylindrical structure lined with a refractory material and which is arranged so as to rotate (continuously or intermittently) about its cylindrical axis. The cylindrical axis is inclined at an angle to the horizontal and the feed material is fed into the upper open end of the rotating cylinder. The rotation of the cylinder causes the feed material to tumble and gradually to move towards the lower open end of the cylinder. Means are provided to combust a fuel with an oxygen-containing gas so as to produce a flame in the kiln, usually originating from or adjacent the lower open end of the cylinder; the flame heats and/or combusts the feed material tumbling down the inside of the cylinder, in the case of cement manufacture for example thermally processing cement raw material to produce cement clinker therefrom. The thermally processed feed material, or product material, is allowed to fall from the lower open end of the rotary cylinder and is thence conveyed through a cooling system as is known in the art. The hot exhaust gases resulting from the combustion of the fuel are usually employed to preheat the raw material prior to its introduction into the rotary kiln, and the oxygen containing gas for combustion of the fuel may be oxygen enriched air and/or additional oxygen may be lanced into the rotary kiln so as to aid combustion of the fuel, hence increasing the temperature of the flame opposite the charge (the "underflame"), thus increasing the rate of heat transfer to the charge and hence the efficiency of the rotary kiln.

In such conventional rotary kilns it is difficult to ensure that the concentration of oxygen is at its optimum level for efficient thermal and/or chemical processing of the feed material at various points as the feed material tumbles down the inside of the rotary kiln and is heated by the flame. It is an object of the present invention to address this problem and hence to improve the efficiency of operation of rotary kilns.

A method of operating a rotary kiln in accordance with the present invention comprises charging the kiln with preheated mineral feed material from a preheater, rotating the kiln continuously or intermittently whilst thermally processing the feed material therein by combustion of a fuel with an oxygen containing gas so as to produce a flame in the kiln, and discharging the processed material from the kiln, wherein at least one jet of liquid oxygen is injected into the kiln so as to impact on the feed material therein.

The advantage of firing liquid oxygen into the rotary kiln over the conventional practice of injecting gaseous oxygen is that the liquid oxygen can be injected well down the kiln so as to land on that portion of the charge material where a high oxygen partial pressure is required for the thermal/chemical process; relatively high density cold gas boils off the liquid oxygen so as to provide a good localised high concentration of oxygen and, subsequently, good distribution of the oxygen immediately adjacent the material being thermally processed. Moreover, the liquid oxygen may be injected so as to form at least one discrete pool of liquid oxygen on the surface of the charge of the feed material within the kiln. Additionally or alternatively, since the charge is normally highly porous, discrete pools of liquid oxygen may be formed within the charge. These pools of liquid oxygen boil due to the localised temperature (typically about 1600°C) so that the pool of liquid oxygen floats on a blanket of oxygen vapour (much in the same way as does water dropped onto a domestic hotplate). This is advantageous because it provides a high concentration of oxygen for the thermal/chemical process in the region immediately adjacent the pool, and also ensures that, should the pool sit on the surface of the kiln, thermal shock of the refractory material thereof is minimised, meaning that no special refractory material is required despite the possible impact of a significantly colder liquid cryogen thereon.

Preferably the liquid oxygen is injected at sufficient velocity to a significant distance into the rotary kiln (as much as 15 to 20m, and at least beyond the reach of the flame), so as to impact on the charge material thereat; the liquid oxygen then accompanies the charge material as it tumbles down inside the rotary kiln.

Conveniently the liquid oxygen is injected, via a vacuum insulated line and a lance for directing the liquid oxygen, into the lower open end of the kiln beneath the flame.

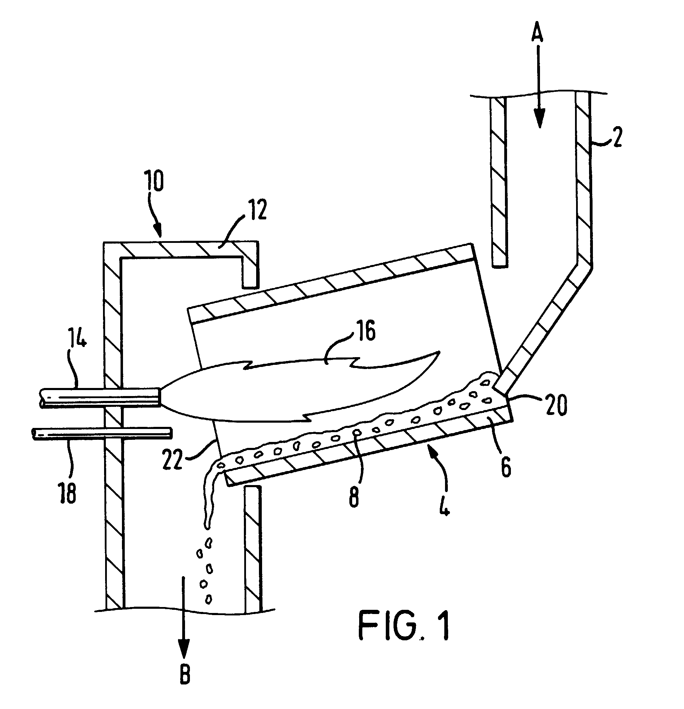

The invention will now be described by way of example and with reference to the accompanying drawing, Figure 1, which is a schematic diagram of a rotary kiln in accordance with the invention.

In the rotary kiln of Figure 1, preheated feed material from a preheater A is delivered via a duct 2 lined with refractory material into the rotary kiln 4 which is lined which is lined with refractory material 6. The rotary kiln 4 has a cylindrical axis which is inclined to the horizontal and which is provided with means (not shown) to cause it to rotate, continuously or intermittently. Due to the rotation of the cylinder 4 the feed material tumbles and gradually moves along the length of the rotary kiln 4 (to the left as shown in Figure 1). A kiln hood 10, also lined with refractory material 12 is provided at the outlet end of the rotary kiln 4 from which the feed material 8, having been thermally-processed as will be described below, is discharged so as to fall under gravity and/or to be conveyed to a cooler indicated generally by reference B.

A burner 14 is provided to produce a flame 16 extending into and along the rotary kiln, as is known in the art. Beneath burner 14 is located a liquid oxygen injection lance 18, which is vacuum insulated so as to prevent evaporation of the liquid oxygen fed thereto, for injecting liquid oxygen into the rotary kiln. The liquid oxygen, which may be injected continuously or intermittently, is injected with sufficient velocity as to penetrate about 15 to 20m into the rotary kiln 4, and, in the kiln illustrated, to impact on the charge material 8 in the region adjacent the open end 20 of the rotary kiln 4.

The liquid oxygen so injected lies in a discrete pool or pools on the surface of the feed material 8, and floats on a vapour blanket of gaseous oxygen evaporated by the heat of the charge material and as heated by the flame 16. As the charge material 8 tumbles down inside the rotary kiln towards to lower outlet end 22 thereof, the liquid oxygen is distributed throughout the charge material, providing a localised high concentration of oxygen and subsequently good distribution of oxygen throughout the charge material, so as to enable the efficient thermal processing effected by the flame 16 on the charge material 8.

Moreover, since in practice some of the liquid oxygen injected will vaporise before impinging on the charge, not only is there the advantage of localised high oxygen concentration due to the liquid oxygen, but also there is the simultaneous effect, due to the vaporised but low temperature oxygen, of increasing the 'underflame' temperature.

The vaporisation of liquid oxygen as it travels along the kiln can also have the advantage of assisting the combustion process; by introducing the fuel with a substoichiometric amount of oxygen-containing gas, combustion is incomplete in the initial part of the flame, but is completed with the addition of the vaporised liquid oxygen further down the kiln. The initial portion of the flame, adjacent the burner, is fairly low in temperature (which tends to reduce harmful NOₓ emissions) and the second portion of the flame, where combustion is completed, extends a significant distance along the kiln.

In one example, the production of sodium dichromate from chromium oxide in a rotary kiln is in accordance with the following equation:

2Cr₂ O₃ + 3O₂ + 4Na₂CO₃ → 4Na₂CrO₄ + 4CO₂

This reaction takes place at about 850°C to 900°C, the maximum temperature at the end of the flame being about 1150°C, which temperature is reached when the material still has some distance to travel through the kiln. The production of a high partial pressure of oxygen in a localised area of the kiln, by injecting liquid oxygen, drives the above reaction to the right of the equation and gives a high yield.

## Claims

1. A method of operating a rotary kiln comprising charging the kiln with preheated mineral feed material from a preheater, rotating the kiln continuously or intermittently whilst thermally processing the feed material therein by combustion of a fuel with an oxygen containing gas so as to produce a flame in the kiln, and discharging the processed material from the kiln, wherein at least one jet of liquid oxygen is injected into the kiln so as to impact on the feed material therein.

2. A method as claimed in Claim 1 wherein the liquid oxygen is injected intermittently.

3. A method as claimed in Claim 1 or Claim 2 wherein the liquid oxygen is injected beneath the flame.

4. A method as claimed in any preceding Claim wherein the liquid oxygen is injected into an end of the kiln and at sufficient velocity to penetrate at least 15m into the kiln.

5. A method as claimed in any preceding Claim wherein the liquid oxygen is injected so as to form at least one discrete pool on the surface of the charge of feed material within the kiln.

6. A method of operating a rotary kiln substantially as hereinbefore described and with reference to the accompanying drawing.

7. A rotary kiln substantially as hereinbefore described and with reference to the accompanying drawing.
